Europäisches Patentamt

European Patent Office

Office européen des brevets

(19)

(11) Numéro de publication : **0 282 377 B1**

(12) **FASCICULE DE BREVET EUROPEEN**

(45) Date de publication du fascicule du brevet :
**27.12.91 Bulletin 91/52**

(51) Int. Cl.⁵ : **H02K 7/116, H02K 23/04,**
**H02K 7/08, H02K 5/14,**
**H01R 39/40**

(21) Numéro de dépôt : **88400331.0**

(22) Date de dépôt : **15.02.88**

(54) Ensemble de motoréducteur électrique et son procédé de montage.

(30) Priorité : **20.02.87 FR 8702264**

(43) Date de publication de la demande :
**14.09.88 Bulletin 88/37**

(45) Mention de la délivrance du brevet :
**27.12.91 Bulletin 91/52**

(84) Etats contractants désignés :
**DE ES GB IT**

(56) Documents cités :
**EP-A- 0 154 469**
**DE-A- 3 328 683**
**DE-U- 8 520 258**
**FR-A- 1 084 485**
**FR-A- 2 304 259**
**FR-A- 2 430 122**
**FR-A- 2 431 595**

(56) Documents cités :
**FR-A- 2 449 354**
**US-A- 1 866 339**
**US-A- 2 027 149**
**US-A- 4 320 931**
**PATENT ABSTRACTS OF JAPAN, vol. 8, no. 81**
**(E-238)[1518], 13 avril 1984; & JP-A-59 2554**

(73) Titulaire : **ECIA - EQUIPEMENTS ET**
**COMPOSANTS POUR L'INDUSTRIE**
**AUTOMOBILE**
**F-25400 Audincourt (Doubs) (FR)**

(72) Inventeur : **Rudi Alain**
**2, rue Collin**
**F- 90000 Essert (FR)**

(74) Mandataire : **Mestre, Jean et al**
**c/o CABINET LAVOIX 2, place d'Estienne**
**d'Orves**
**F-75441 Paris Cédex 09 (FR)**

EP 0 282 377 B1

## Description

La présente invention concerne un ensemble de motoréducteur électrique perfectionné et un procédé de montage d'un tel ensemble.

On connaît déjà dans l'état de la technique un certain nombre d'ensembles de ce type. Ces motoréducteurs comportent en général un organe de support, un moteur électrique comprenant un stator à aimants permanents, solidaire de l'organe de support, un rotor, une plaque porte-balais et des balais, une vis sans fin, fixée sur l'organe de support par l'intermédiaire de deux paliers et une roue dentée.

Dans ces ensembles, le moteur est réalisé séparément de l'organe de support puis fixé sur celui-ci, ce qui se traduit par le fait que ces ensembles présentent un certain nombre d'inconvénients au niveau de leur encombrement, de leur poids, de leur structure relativement complexe et donc de leur prix de revient relativement élevé.

Un exemple de ce type de solution est illustré par le document FR-A-2449354. Ce qui est révélé par ce document et aussi nécessaire à l'exposé de l'invention est mentionné dans le préambule de la revendication 1.

Le but de l'invention est donc de résoudre ces problèmes en proposant un ensemble de motoréducteur dont l'encombrement et le poids soient réduits par rapport aux ensembles de l'état de la technique, dont la structure soit telle qu'elle permette un montage de cet ensemble selon un seul axe, pour faciliter une automatisation de son montage, qu'il comporte un minimum de fer et donc que son prix de revient soit le plus bas possible.

A cet effet, l'invention a pour objet un ensemble de motoréducteur électrique du type de celui indiqué dans le préambule de la revendication 1 et dont les particularités ressortent notamment de la partie caractérisante de celle-ci.

Selon un autre aspect, l'invention a également pour objet un procédé de montage d'un ensemble tel que décrit précédemment.

L'invention sera mieux comprise à l'aide de la description qui va suivre, donnée uniquement à titre d'exemple et faite en se référant aux dessins annexés, sur lesquels :

— la Fig. 1 représente une vue en perspective éclatée d'un ensemble de motoréducteur électrique selon l'invention ;

— la Fig. 2 représente une vue de côté d'un moteur électrique entrant dans le constitution d'un ensemble selon l'invention ;

— la Fig. 3 représente une vue de dessus d'un ensemble de motoréducteur selon l'invention ;

— la Fig. 4 représente une vue de face d'une plaque porte-balais entrant dans la constitution d'un ensemble de motoréducteur selon l'invention ;

— les Fig. 5 et 6 représentent, à échelle agrandie, respectivement une vue de face et une vue en coupe d'une partie de la plaque porte-balais et d'un balai entrant dans la constitution d'un ensemble selon l'invention ; et

— les Fig. 7, 8 et 9 illustrent différentes étapes du montage d'une plaque porte-balais sur un ensemble de motoréducteur selon l'invention.

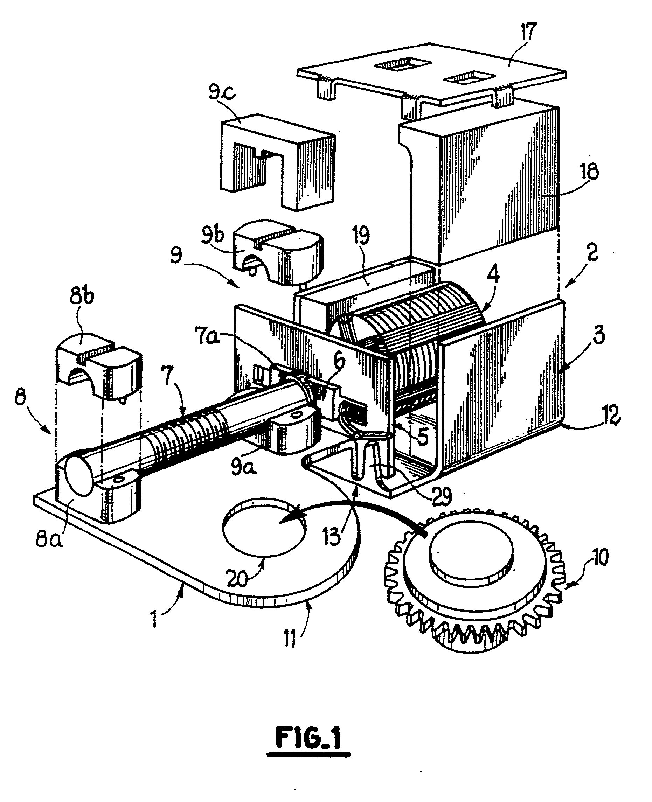

Ainsi qu'on peut le voir sur la Fig. 1, un ensemble de motoréducteur électrique selon l'invention comporte un organe de support 1, un moteur électrique à courant continu 2 comprenant un stator 3 à aimants permanents, solidaire de l'organe de support 1, un rotor 4, une plaque porte-balais 5 et des balais 6, une vis sans fin 7 fixée sur l'organe de support par l'intermédiaire de deux paliers 8 et 9 et une roue dentée 10. Le rotor 4 du moteur est monté en porte-à-faux sur un prolongement 7a de la vis sans fin 7, ce prolongement s'étendant au-delà du palier 9 de fixation de la vis sans fin sur l'organe de support.

Cet organe de support 1 comporte avantageusement une première partie 11 en forme de plaque de support sur laquelle sont fixées la vis sans fin et la roue dentée. Cette première partie 11 se prolonge par une seconde partie 12 en forme de boîtier de réception du moteur électrique 2.

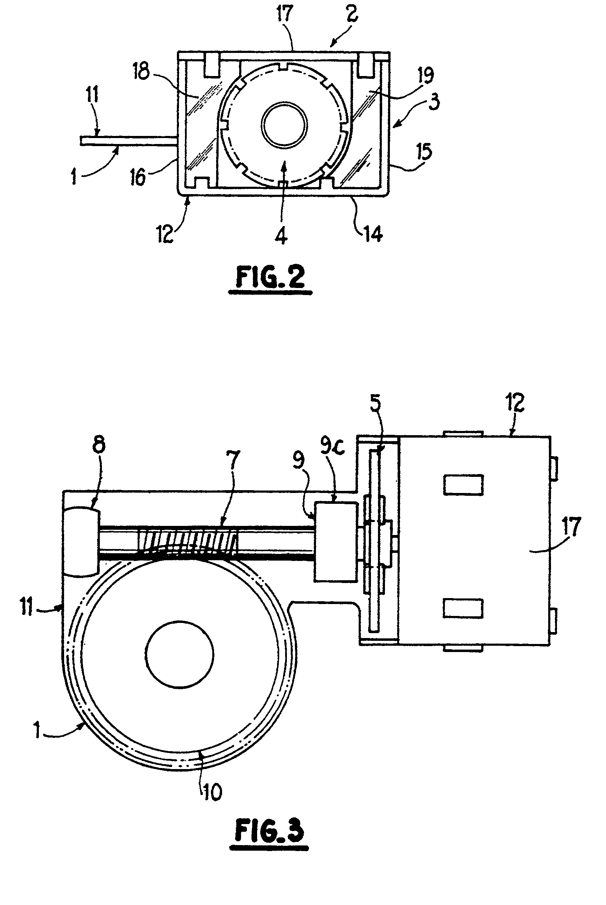

L'organe de support 1 est avantageusement en fer doux et la seconde partie 12 de cet organe de support 1 est reliée à la première, 11, par exemple par un décrochement 13. Cette seconde partie comporte, comme on peut le voir plus clairement sur la Fig. 2, une portion 14 à peu près parallèle à la plaque de support 11, et à partir de laquelle s'étendent deux parois 15 et 16 à peu près parallèles à l'axe de la vis sans fin 7 et à peu près perpendiculaires à la dite portion 14, pour constituer respectivement le fond et les parois latérales du boîtier de réception du moteur.

Une plaquette 17 également en fer doux est prévue pour constituer le couvercle du boîtier et fermer, avec la portion 14, le circuit magnétique du stator du moteur. Cette plaquette permet également de maintenir les aimants du moteur en position. Il va de soi que des pièces présentant une autre forme que cette plaquette peuvent être utilisées.

Ainsi qu'il est représenté sur ces figures 1 et 2, les aimants permanents 18 et 19 du stator du moteur électrique se présentent sous la forme générale de pièces en L montées tête-bêche de part et d'autre du rotor 4 de ce moteur, de manière à faciliter le montage de celui-ci comme cela sera décrit par la suite.

Les paliers 8 et 9, sont constitués comme on peut le voir sur la Fig. 1, par deux demi-coquilles 8a, 8b et 9a, 9b respectivement, fixées l'une sur l'autre parallèlement au plan défini par la première partie 11 de l'organe de support 1, de manière à permettre le montage de l'ensemble selon l'invention suivant un seul axe comme on le décrira par la suite.

Par ailleurs, le palier 9 le plus proche du moteur électrique 2 présente une cloison étanche 9c de séparation du moteur du reste du motoréducteur de manière à empêcher le passage de tout corps étranger, par exemple de graisse, dans le moteur électrique, ce qui risquerait de perturber son fonctionnement.

La première partie 11 de l'organe de support 1 comporte également un évidement 20 (Fig. 1) de centrage et de guidage en rotation de la roue dentée 10 afin de la maintenir en prise avec la vis sans fin 7.

Ainsi qu'on peut le voir sur la Fig. 3, la première partie 11 de l'organe de support peut présenter une forme correspondante à celle de la roue dentée 10.

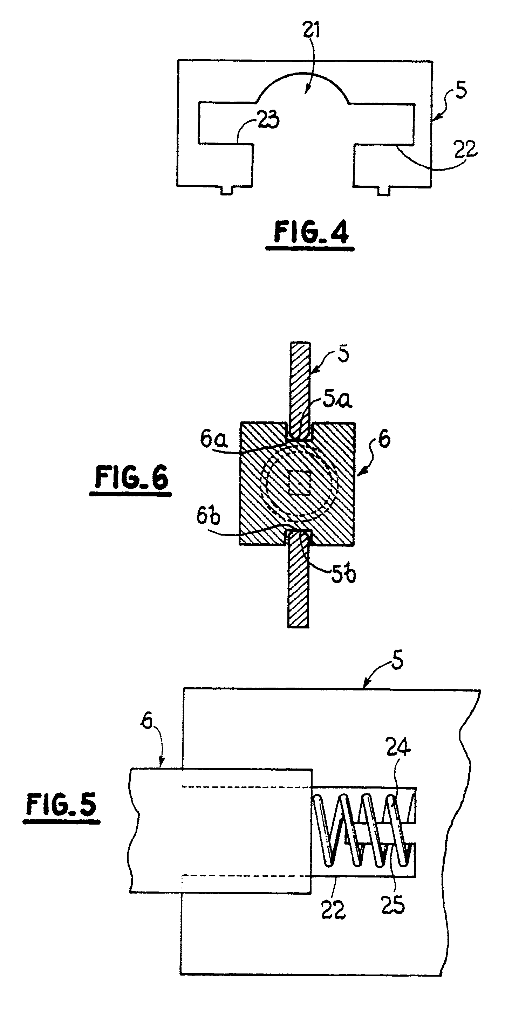

Comme il est représenté sur la Fig. 4, la plaque porte-balais comporte un évidement 21 de réception du collecteur du moteur. Cet évidement débouche sur l'un des côtés de la plaque 5 pour permettre le montage de cette plaque sur le moteur, perpendiculairement au plan défini par la première partie 11 de l'organe de support 1 comme cela sera décrit plus en détail par la suite.

Cette plaque 5 comporte également des décrochements 22 et 23, de réception des balais, ménagés de part et d'autre de l'évidement 21.

Comme on peut le voir sur les Fig. 5 et 6, les balais, par exemple 6, comportent des rainures longitudinales 6a et 6b sur deux faces opposées. Ces rainures coopèrent avec des rebords 5a et 5b respectivement de la plaque, délimitant les décrochements 22 et 23 de réception de ces balais. Des moyens élastiques 24, constitués par exemple par un ressort hélicoïdal, sont prévus pour solliciter chaque balai vers le collecteur du moteur. Il est à noter que ces moyens élastiques sont avantageusement disposés autour d'un téton 25 de centrage de ces moyens élastiques, par exemple venu de matière avec la plaque porte-balais 5.

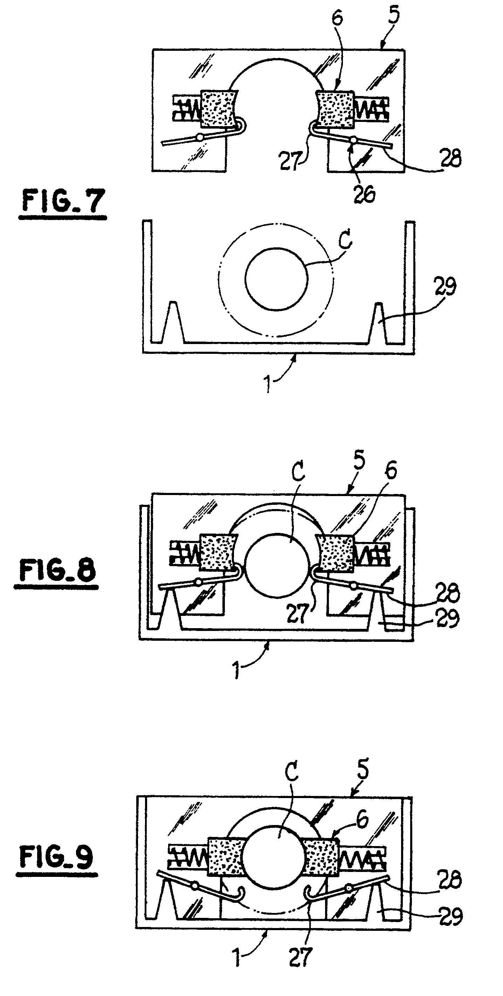

Comme on peut le voir sur la Fig. 7, la plaque porte-balais 5 comporte également des moyens amovibles 26 de blocage des balais 6 en position escamotée dans les décrochements de la plaque porte-balais pour faciliter le montage de cette plaque 5 sur le moteur et en particulier sur le collecteur C de celui-ci.

Chacun des moyens de blocage est avantageusement constitué par un organe articulé, par exemple dans sa partie centrale, sur la plaque 5 et comportant à l'une de ses extrémités un crochet 27 de blocage du balai correspondant en position escamotée et l'autre des ses extrémités une surface d'actionnement 28 pour le déplacer vers sa position de libération du balai correspondant.

En effet, et comme on peut le voir plus particulièrement sur les Fig. 8 et 9, chaque surface d'actionnement est adaptée pour coopérer avec une surface de butée correspondante, par exemple 29, solidaire de l'organe de support 1, pour libérer le balai 6 correspondant, lors du montage de la plaque porte-balais sur le moteur. Avantageusement, les surfaces du butée sont venues de matière avec l'organe de support 1.

Le montage de la plaque porte-balais et donc des balais qui sont solidaires de celle-ci, est très facile dans la mesure où la libération des balais vers leur position active se fait automatiquement lors du montage de la plaque porte-balais sur le moteur.

Il est également à noter que la plaque porte-balais 5, peut être constituée par une plaque de circuit imprimé à laquelle sont reliés les fils d'alimentation des balais.

Le montage d'un ensemble de motoréducteur tel que décrit précédemment peut donc être réalisé suivant un seul axe perpendiculaire au plan défini par la première partie 11 de l'organe de support 1, et consiste :

— à disposer dans le boîtier formé par la seconde partie 12 de l'organe de support 1, l'aimant 19,

— à fixer sur cet organe et plus particulièrement sur la première partie 11 de celui-ci, les deux demi-coquilles 8a et 9a entrant dans la constitution des paliers 8 et 9,

— à placer la vis sans fin dans les demi-coquilles 8a, 9a et donc le rotor 4 du moteur, monté en porte-à-faux sur le prolongement 7a de cette vis, dans le boîtier constitué par la seconde partie 12 de l'organe de support,

— à disposer le roue dentée 10 sur la première partie 11 de l'organe de support,

— à mettre la plaque porte-balais 5 en place autour du collecteur C du moteur suivant la procédure décrite en regard des Fig. 7 à 9,

— à disposer dans le boîtier constitué dans la deuxième partie 12 de l'organe de support, le deuxième aimant 18,

— à fixer sur les deux premières demi-coquilles 8a et 9a solidaires de la première partie 11 de l'organe de support, les deux autres demi-coquilles 8b et 9b de manière à former les paliers 8, 9, et

— à fixer sur le boîtier constitué par la seconde partie de l'organe de support, la plaquette 17 formant le couvercle de celui-ci, fermant ainsi le circuit magnétique du stator du moteur.

Il est à noter que la forme de l'organe de support peut être obtenue par toute technique connue comme par exemple par emboutissage.

La structure de l'ensemble selon l'invention permettant son montage suivant un seul axe, et le nombre de pièces relativement réduit entrant dans sa constitution, permettent une automatisation relativement facile de son montage et donc une réduction de son coût de fabrication.

De plus, une plaque supplémentaire peut également être disposée au-dessus de la première partie 11 de l'organe de support de manière à protéger la vis sans fin et la roue dentée et assurer un guidage complémentaire de cette dernière.

Cet ensemble de motoréducteur électrique trouve des applications par exemple dans le domaine de l'industrie automobile, en particulier pour des actionneurs de lève-vitres ou de panneaux coulissants de véhicules automobiles.

## Revendications

1. Ensemble de motoréducteur électrique du type comportant un organe de support (1), monté sur cet organe de support (1) un moteur électrique (2) comprenant un stator (3) à aimants permanents (18, 19), une plaque porte-balais (5) avec des balais (6), un rotor (4) avec un collecteur (C) et une vis sans fin (7) en prise avec une roue dentée (10), des paliers (8, 9) qui encadrent la vis sans fin (7) à chacune de ses extrémités qui y tourillonnent et qui sont disposés de manière à y ménager un prolongement (7a) en porte-à-faux sur lequel est monté le rotor (4), caractérisé en ce que l'organe de support (1) est en fer doux, est d'un seul tenant et comporte une première partie (11) en forme de plaque de support et, prolongeant et reliée à cette première partie (11) par un décrochement (13), une seconde partie (12) en forme de boîtier en U avec une portion (14) approximativement parallèle à la première partie (11) en forme de plaque de support et deux parois (15, 16) approximativement à la fois perpendiculaires à cette portion (14) et parallèles à la vis sans fin (7), en ce que chacun des paliers (8, 9) est constitué par deux demi-coquilles (8a, 8b ; 9a, 9b) fixées l'une sur l'autre selon un plan, en ce que cette première partie (11) en forme de plaque de support porte les paliers (8, 9) de manière que leur plan de fixation soit parallèle à cette plaque de support afin de permettre d'y monter la vis sans fin (7) et la roue dentée (10) et en ce qu'une plaquette (17) en fer doux est placée sur les deux parois (15, 16) pour clore le boîtier en U et constituer le circuit magnétique fermé du stator (3).

2. Ensemble selon la revendication 1, caratérisé en ce que la première partie (11) en forme de plaque de support de l'organe de support (1) comporte un évidement (20) de centrage et de guidage en rotation de la roue dentée (10).

3. Ensemble selon l'une quelconque des revendications précédentes, caractérisé en ce que le palier (9) le plus proche du moteur électrique (2) présente une cloison étanche (9c) de séparation du moteur (2) du reste du motoréducteur.

4. Ensemble selon l'une quelconque des revendications précédentes, caractérisé en ce que les aimants permanents (18, 19) se présentent sous la forme générale de pièces en L montées tête-bêche de part et d'autre du rotor (4) du moteur électrique.

5. Ensemble selon l'une quelconque des revendications précédentes, caractérisé en ce que ladite plaque porte-balais (5) comporte un évidement (21) de réception du collecteur (C) du moteur électrique, ledit évidement débouchant sur l'un des côtés de la plaque (5) pour permettre le montage de cette plaque sur le moteur perpendiculairement au plan défini par la première partie (11) de l'organe de support (1).

6. Ensemble selon la revendication 5, caractérisé en ce que la plaque porte-balais (5) comporte des moyens amovibles (26) de blocage des balais (6) en position escamotée pour faciliter le montage de cette plaque (5) sur le moteur électrique.

7. Ensemble selon la revendication 6, caractérisé en ce que chacun des moyens de blocage est constitué par un organe articulé sur la plaque porte-balais (5) et comportant à l'une de ses extrémités un crochet (27) de blocage du balai correspondant en position escamotée et à l'autre de ses extrémités une surface d'actionnement (28) pour le déplacer vers sa position de libération du balai correspondant.

8. Ensemble selon la revendication 7, caractérisé en ce que chaque surface d'actionnement (28) est adaptée pour coopérer avec une surface de butée correspondante (29) solidaire de l'organe de support (1) pour libérer le balai correspondant lors du montage de la plaque porte-balais (5) sur le moteur élec, trique.

9. Ensemble selon l'une quelconque des revendications 5 à 8, caractérisé en ce que lesdits balais (6) comportent des rainures longitudinales (6a, 6b) sur deux faces opposées coopérant avec des rebords de guidage (5a, 5b) de la plaque porte-balais (5), délimitant des décrochements (22, 23) de réception de ces balais, ménagés de part et d'autre dudit évidement (21) de réception du collecteur, des moyens élastiques (24) étant prévus pour solliciter lesdits balais vers le collecteur (C) du moteur.

10. Ensemble selon l'une quelconque des revendications précédentes, caractérisé en ce que l'organe de support (1) comporte un évidement (20) de centrage et de guidage en rotation de la roue dentée (10).

11. Procédé de montage d'un ensemble tel que décrit dans les revendications précédentes, caractérisé en ce qu'il comprend les étapes suivantes :
— on dispose dans le boîtier formé par la seconde partie (12) de l'organe de support (1), l'un (19) desdits aimants permanents,
— on fixe sur cet organe de support (1), deux demi-coquilles (8a, 9a) entrant dans la constitution des paliers,
— on place la vis sans fin (7) et le rotor (4) du moteur en position sur cet organe de support (1),
— on dispose la roue dentée sur la première partie (11) de l'organe de support (1),
— on monte la plaque porte-balais (5) autour du collecteur (C) du moteur,
— on dispose dans le boîtier le deuxième aimant (18),
— on fixe sur les deux demi-coquilles (8a, 9a) solidaires de l'organe de support (1), les deux autres demi-coquilles (8b, 9b) entrant dans la constitution des paliers (8, 9), et
— on fixe sur la seconde partie (12) de l'organe de support, constituant le boîtier, la plaquette (17) formant le couvercle de celui-ci.

## Patentansprüche

1. Elektrische Getriebemotoreinheit mit einem Tragteil (1), einem auf diesem Tragteil (1) montierten Elektromotor (2) mit einem Stator (3) mit Permanentmagneten (18, 19), einem Schleifkontaktträger (5) mit Schleifkontakten (6), einem Rotor (4) mit einem Kollektor (C) und einer Schnecke (7) in Eingriff mit einem Schneckenrad (10), Lagern (8, 9), die die Schnecke (7) an ihren beiden Enden einfassen, die Drehzapfen für die Schnecke bilden und so an geordnet sind, daß die Schnecke eine fliegend gelagerte Verlängerung (7a) aufweist, auf welcher der Rotor (4) montiert ist, dadurch **gekennzeichnet,** daß das Tragteil (1) in einem Stück aus Weicheisen gebildet ist und einen ersten Teil (11) in Form einer Tragplatte sowie einen in Verlängerung dieses ersten Teils (11) angeordneten und über einen Absatz (13) mit diesem verbundenen zweiten Teil (12) in Form eines U-förmigen Kastens aufweist, mit einem annähernd parallel zu dem ersten Teil (11) in Form der Tragplatte verlaufenden Abschnitt (14) und zwei Wänden (15, 16), die annähernd rechtwinklig zu diesem Abschnitt (14) und zu gleich parallel zu der Schnecke (7) verlaufen, daß jedes der Lager (8, 9) durch zwei Halbschalen (8a, 8b; 9a, 9b) gebildet wird, die in einer Teilungsebene aufeinander befestigt sind, daß der tragplattenförmige erste Teil (11) die Lager (8, 9) derart trägt, daß ihre Teilungsebene zu der Tragplatte parallel ist, so daß die Montage der Schnecke (7) und des Schneckenrades (10) daran ermöglicht wird, und daß eine Weicheisenplatte (17) auf den beiden Wänden (15, 16) angeordnet ist, um den U-förmigen Kasten zu schließen und den geschlossenen magnetischen Kreis des Stators (3) zu bilden.

2. Einheit nach Anspruch 1, dadurch **gekennzeichnet,** daß der tragplattenförmige erste Teil (11) des Tragteils (1) eine Ausnehmung (20) zur Zentrierung und drehbaren Lagerung des Schneckenrades (10) aufweist.

3. Einheit nach einem der vorstehenden Ansprüche, dadurch **gekennzeichnet,** daß das näher an dem Elektromotor (2) gelegene Lager (9) ein Schott (9c) zur Trennung des Motors (2) vom übrigen Teil des Getriebemotors bildet.

4. Einheit nach einem der vorstehenden Ansprüche, dadurch **gekennzeichnet,** daß die Permanentmagnete (18, 19) als allgemein L-förmige Teile ausgebildet sind, die Kopf an Fuß beiderseits des Rotors (4) des Elektromotors montiert sind.

5. Einheit nach einem der vorstehenden Ansprüche, dadurch **gekennzeichnet,** daß der Schleifkontaktträger (5) eine Ausnehmung (21) zur Aufnahme des Kollektors (C) des Elektromotors aufweist, welche Ausnehmung zu einer der Kanten des Schleifkontaktträgers (5) hin geöffnet ist, um die Montage des Schleifkontaktträgers auf dem Motor rechtwinklig zu der durch den ersten Teil (11) des Tragteils (1) definierten Ebene zu ermöglichen.

6. Einheit nach Anspruch S, dadurch **gekennzeichnet,** daß der Schleifkontaktträger (5) lösbare Mittel (26) zum Arretieren der Schleifkontakte (6) in einer zurückgezogenen Position aufweist, um die Montage des Schleifkontaktträgers (5) auf dem Elektromotor zu erleichtem.

7. Einheit nach Anspruch 6, dadurch **gekennzeichnet,** daß jedes der Arretiermittel durch ein gelenkig an dem Schleifkontaktträger (5) montiertes Organ gebildet wird und an einem seiner Enden einen Haken (27) zur Arretierung des zugehörigen Schleifkontaktes in der zurückgezogenen Position und an seinem anderen Ende eine Betätigungsfläche (28) für die Verstellung in seine Freigabestellung für den zugehörigen Schleifkontakt aufweist.

8. Einheit nach Anspruch 7, dadurch **gekennzeichnet,** daß jede der Betätigungsflächen (28) mit einer zugehörigen Anschlagfläche (29) zusammenwirkt, die an dem Tragteil (1) ausgebildet ist, um den zugehörigen Schleifkontakt bei der Montage des Schleifkontaktträgers (5) auf dem Elektromotor freizugeben.

9. Einheit nach einem der Ansprüche 5 bis 8, dadurch **gekennzeichnet,** daß die Schleifkontakte (6) Längsnuten (6a, 6b) auf zwei entgegengesetzten Oberflächen aufweisen, die mit Führungskanten (5a, 5b) des Schleifkontaktträgers (5) zusammenwirken, die beiderseits der Ausnehmung (21) für den Kollektor vorgesehene Ausnehmungen (22, 23) zur Aufnahme der Schleifkontakte begrenzen, und daß elastische Mittel (24) vorgesehen sind, um die Schleifkontakte gegen den Kollektor (C) des Motors vorzuspannen.

10. Einheit nach einem der vorstehenden Ansprüche, dadurch **gekennzeichnet,** daß das Tragteil (1) eine Ausnehmung (20) zur Zentrierung und drehbaren Lagerung des Schneckenrades (10) aufweist.

11. Verfahren zur Montage einer Getriebemotoreinheit nach einem der vorstehenden Ansprüche, **gekennzeichnet** durch die folgenden Schritte :
— einer (19) der Permanentmagnete wird in dem durch den zweiten Teil (12) des Tragteils (1) gebildeten Kasten angeordnet,
— auf dem Tragteil (1) werden zwei Halbschalen (8a, 9a) befestigt, die Teile der Lager bilden,
— die Schnecke (7) und der Rotor (4) des Motors werden auf dem Tragteil (1) in Position gebracht,
— das Schneckenrad wird an dem ersten Teil (11) des Tragteils (1) angeordnet,
— der Schleifkontaktträger (5) wird über dem Kollektor (C) des Motors montiert,

— der zweite Magnet (18) wird in dem Kasten angeordnet,

— auf den beiden Halbschalen (8a, 9a), die an dem Tragteil (1) angebracht sind, werden die beiden anderen Halbschalen (8b, 9b) zur Bildung der Lager (8, 9) befestigt und

— auf dem zweiten Teil (12) des Tragteils, das den Kasten bildet, wird die den Deckel desselben bildende Platte (17) befestigt.

## Claims

1. Electric geared motor unit of the type having a support member (1), mounted on this support member (1) an electric motor (2) comprising a stator (3) with permanent magnets (18, 19), a brush holder plate (5) with brushes (6), a rotor (4) with a commutator (C) and a worm (7) in engagement with a gear (10), bearings (8, 9) which enclose the worm (7) at each of its ends which pivot in them and which are arranged so as to provide there a cantilevered extension (7a) on which is mounted the rotor (4), characterised in that the support member (1) is made from soft iron, is made in one piece and has a first part (11) in the form of a support plate and, extending and connected to this first part (11) by a notch (13), a second part (12) in the form of a U-shaped casing with a portion (14) approximately parallel to the first part (11) in the form of a support plate and two walls (15, 16) approximately both perpendicular to this portion (14) and parallel to the worm (7), in that each of the bearings (8, 9) is formed by two half-shells (8a, 8b ; 9a, 9b) fixed one above the other in one plane, in that this first part (11) in the form of a support plate carries the bearings (8, 9) in such a way that their fixing plane is parallel to this support plate in order to enable the worm (7) and the gear (10) to be mounted on it and in that a plate (17) made from soft iron is placed on the two walls (15, 16) in order to close off the U-shaped casing and form the closed magnetic circuit of the stator (3).

2. Unit according to claim 1, characterised in that the first part (11) in the form of a support plate of the support member (1) has a cut-out (20) for aligning and guiding in rotation the gear (10).

3. Unit according to either of the preceding claims, characterised in that the bearing (9) closest to the electric motor (2) has a sealed partition (9c) for separating the motor (2) from the rest of the geared motor unit.

4. Unit according to any one of the preceding claims, characterised in that the permanent magnets (18, 19) are in the general form of L-shaped pieces mounted head to tail on each side of the rotor (4) of the electric motor.

5. Unit according to any one of the preceding claims, characterised in that the said brush holder plate (5) has a hollow (21) for housing the commutator (C) of the electric motor, the said hollow opening out onto one of the sides of the plate (5) to enable this plate to be mounted on the motor perpendicular to the plane defined by the first part (11) of the support member (1).

6. Unit according to claim 5, characterised in that the brush holder plate (5) has removable means (26) for locking the brushes (6) in the retracted position in order to facilitate the mounting of this plate (5) on the electric motor.

7. Unit according to claim 6, characterised in that each of the locking means is formed by a member articulated on the brush holder plate (5) and having at one of its ends a hook (27) for locking the corresponding brush in the retracted position and at the other one of its ends an actuating area (28) to move it to its position for releasing the corresponding brush.

8. Unit according to claim 7, characterised in that each actuating area (28) is suitable for interacting with a corresponding abutment area (29) integral with the support member (1) in order to release the corresponding brush when the brush holder plate (5) is mounted on the electric motor.

9. Unit according to any one of claims 5 to 8, characterised in that the said brushes (6) have longitudinal grooves (6a, 6b) on two opposite faces interacting with shoulders (5a, 5b) for guiding the brush holder plate (5), defining recesses (22, 23) for accommodating these brushes, provided on each side of the said hollow (21) for housing the commutator, elastic means (24) being provided to impel the said brushes towards the motor commutator (C).

10. Unit according to any one of the preceding claims, characterised in that the support member (1) has a cut-out (20) for aligning and guiding in rotation the gear (10).

11. Method of assembling a unit as described in the preceding claims, characterised in that it comprises the following steps :

— one (19) of the said permanent magnets is arranged in the casing formed by the second part (12) of the support member (1),

— two half-shells (8a, 9a) forming part of the bearings are fixed to this support member (1),

— the worm (7) and the motor rotor (4) are placed in position on this support member (1),

— the gear is arranged on the first part (11) of the support member (1),

— the brush holder plate (5) is mounted around the motor commutator (C),

— the second magnet (18) is arranged in the casing,

— on the two half-shells (8a, 9a) fixed to the support member (1), are fixed the two other half-shells (8b, 9b) forming part of the bearings (8, 9), and

— onto the second part (12) of the support member, constituting the casing, is fixed the plate (17) forming the cover of the casing.

## FIG.1

**FIG.2**

**FIG.3**

**FIG.4**

**FIG.6**

**FIG.5**

**FIG.7**

**FIG.8**

**FIG.9**